(19) Europäisches Patentamt
European Patent Office
Office européen des brevets

(11) Veröffentlichungsnummer: **0 243 768**
**B1**

# (12) EUROPÄISCHE PATENTSCHRIFT

(45) Veröffentlichungstag der Patentschrift: **14.11.90**

(51) Int. Cl.⁵: **C08F 2/32**

(21) Anmeldenummer: **87105414.4**

(22) Anmeldetag: **11.04.87**

(54) **Verfahren zur Herstellung perlförmiger Polymerisate auf Basis von wasserlöslichen ethylenisch ungesättigten Monomeren.**

(30) Priorität: **18.04.86 DE 3613081**

(43) Veröffentlichungstag der Anmeldung:
**04.11.87 Patentblatt 87/45**

(45) Bekanntmachung des Hinweises auf die Patenterteilung:
**14.11.90 Patentblatt 90/46**

(84) Benannte Vertragsstaaten:
**AT BE CH DE FR GB IT LI NL SE**

(56) Entgegenhaltungen:
**EP-A- 0 126 528**
**US-A- 2 982 749**

(73) Patentinhaber: **BASF Aktiengesellschaft,**
**Carl-Bosch-Strasse 38, D-6700 Ludwigshafen(DE)**

(72) Erfinder: **Heide, Wilfried, Dr., Am Wurmberg 16,**
**D-6701 Freinsheim(DE)**
Erfinder: **Hartmann, Heinrich, Dr., Weinheimer Str. 46,**
**D-6703 Limburgerhof(DE)**
Erfinder: **Vamvakaris, Christos, Dr., Riedweg 6,**
**D-6701 Kallstadt(DE)**

**EP 0 243 768 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Aus der US-PS 2 982 749 ist ein Verfahren zur Herstellung perlförmiger Polymerisate aus wasserlöslichen ethylenisch ungesättigten Monomeren, wie Acrylamid, Methacrylamid, Acrylsäure, Methacrylsäure, Alkalimetall- und Ammoniumsalzen von 2-Sulfoethylacrylat und 2-Aminoethylmethacrylathydrochlorid, bekannt. Bei diesem Verfahren wird zunächst eine wäßrige Lösung der Monomeren in einem organischen Lösungsmittel unter Verwendung anorganischer Suspensionsmittel, die eine niedrige hydrophile-lyophile Balance haben, zu einer Wasser-in-Öl-Suspension dispergiert und die Suspension anschließend in Gegenwart von Polymerisationsinitiatoren durch Erwärmen der Mischungen auf Temperaturen bis zu 100°C unter Bildung einer Wasser-in-Öl-Polymersuspension polymerisiert. Als Suspensionsmittel werden dabei beispielsweise silanisierte Kieselsäure oder feinteilige Mineralien, wie Kaolin oder Bentonit, die mit organischen Aminen modifiziert sind, verwendet. Als Ölphase kommen aromatische oder chlorierte Kohlenwasserstoffe in Betracht. Der Teilchendurchmesser der nach diesem Verfahren hergestellten perlförmigen Polymerisate liegt zwischen etwa 10 µm und 2 mm. Mit Hilfe der bekannten Suspensionsmittel ist es zwar in den meisten Fällen möglich, in aromatischen Kohlenwasserstoffen oder chlorierten Kohlenwasserstoffen als Ölphase stabile Suspensionen herzustellen, jedoch ist das System im Verlauf der Polymerisation nicht immer stabil genug, so daß Agglomerationen der Polymerperlen beobachtet werden. Ersetzt man die Ölphase durch aliphatische Kohlenwasserstoffe, so ist die Stabilität der erhaltenen Wasser-in-Öl-Suspensionen noch weitaus geringer. Während der Polymerisation kommt es zur Koagulation der Polymerteilchen.

Aus der EP-Anmeldung 23 748 ist eine Verbesserung des oben beschriebenen Verfahrens bekannt, die darin besteht, daß man nur solche aminierten Bentonite oder andere aminierte Suspensionsmittel verwendet, deren Gehalt an nicht reagiertem Amin unterhalb von 0,5 Gew.% liegt. In den Beispielen 1 und 4 wird zur Erniedrigung des Gehalts an freiem Amin im Suspensionsmittel eine geringe Menge Natriumlaurylsulfat zugesetzt, die 1 Gew.%, bezogen auf das Suspensionsmittel, beträgt. Wie aus den Beispielen der EP-Anmeldung hervorgeht, erfolgt die Polymerisation vorzugsweise in Xylol. Daneben ist es auch möglich, aliphatische, aromatische und chlorierte Kohlenwasserstoffe als Ölphase der Wasser-in-Öl-Suspensionen zu verwenden. Die Stabilität von Wasser-in-Öl-Suspensionen, die durch Dispergieren einer wäßrigen Monomerlösung in einem aliphatischen Kohlenwasserstoff unter Verwendung von aminierten Bentoniten hergestellt werden, die praktisch frei von nicht reagiertem Amin sind, ist jedoch so gering, daß während der Polymerisation eine starke Koagulatbildung eintritt. Verwendet man dagegen als Ölphase aromatische Kohlenwasserstoffe oder chlorierte Kohlenwasserstoffe, so ist es zwar möglich, mit Hilfe der beschriebenen Suspensionsmittel perlförmige Polymerisate herzustellen, jedoch enthalten die perlförmigen Polymerisate mehr oder weniger größere Mengen an Ölphase. Die den Polymerisaten anhaftende Ölphase ist mit Hilfe einfacher Maßnahmen nicht vollständig daraus zu entfernen. Die Polymerisate weisen daher einen intensiven Geruch auf, wobei außerdem beachtet werden muß, daß chlorierte Kohlenwasserstoffe und Benzol physiologisch bedenklich sind.

Der Erfindung liegt daher die Aufgabe zugrunde, ein Verfahren zur Herstellung von perlförmigen Polymerisaten auf Basis von wasserlöslichen ethylenisch ungesättigten Monomeren zur Verfügung zu stellen, bei dem man in physiologisch unbedenklichen Lösemitteln als äußere Phase einer Wasser-in-Öl-Suspension polymerisieren kann.

Die Aufgabe wird erfindungsgemäß mit einem Verfahren zur Herstellung perlförmiger Polymerisate auf Basis von wasserlöslichen ethylenisch ungesättigten Monomeren durch umgekehrte Suspensionspolymerisation, bei der man zunächst eine wäßrige Lösung der Monomeren in einem aliphatischen Kohlenwasserstoff unter Verwendung anorganischer Suspensionsmittel auf Basis modifizierter feinteiliger Mineralien zu einer Wasser-in-Öl-Suspension dispergiert und diese Suspension anschließend in Gegenwart von Polymerisationsinitiatoren unter Bildung einer Wasser-in-Öl-Polymersuspension polymerisiert, dadurch gelöst, daß man die Polymerisation zusätzlich in Gegenwart von 0,1 bis 5 Gew.%, bezogen auf die eingesetzten Monomeren, eines nichtionischen Tensids durchführt. Die nichtionischen Tenside haben einen HLB-Wert von 2 bis 16.

Nach dem erfindungsgemäßen Verfahren werden wasserlöslich monoethylenisch ungesättigte Verbindungen nach dem Verfahren der umgekehrten Suspensionspolymerisation polymerisiert. Wichtigste Vertreter der Gruppe von wasserlöslichen ethylenisch ungesättigten Monomeren (a) sind beispielsweise ethylenisch ungesättigte $C_3$- bis $C_5$-Carbonsäuren, deren Amide und Ester mit Aminoalkoholen der Formel

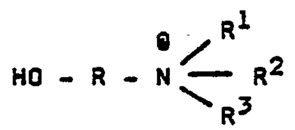

(I),

in der R = $C_2$- bis $C_5$-Alkylen, $R^1$, $R^2$, $R^3$ = H, $CH_3$, $C_2H_5$, $C_3H_7$ bedeutet. Bei diesen Verbindungen handelt es sich beispielsweise um Acrylsäure, Methacrylsäure, Crotonsäure, Itaconsäure, Maleinsäure, Fumarsäure, Acrylamid, Methacrylamid, Crotonsäureamid, Dimethylaminoethylacrylat, Diethylaminoethylacrylat, Dimethylaminopropylacrylat, Dimethylaminobutylacrylat, Diethylaminoethylmethacrylat, Dimethylaminoethylmethacrylat, Dimethylaminopropylacrylat, Dimethylaminoneopentylacrylat und Dimethylaminoneopentylmethacrylat. Die basischen Acrylate und Methacrylate werden in Form der Salze mit starken Mineralsäuren oder Carbonsäuren oder in quaternisierter Form eingesetzt. Das Anion $X^{\ominus}$ für die Verbindungen der Formel I ist der Säurerest der Mineralsäuren bzw. der Carbonsäuren oder Methosulfat, Ethosulfat oder Halogen aus einem Quaternierungsmittel. Weitere wasserlösliche Monomere der Gruppe (a) sind N-Vinylpyrrolidon, Acrylamidopropansulfonsäure, Vinylphosphonsäure und/oder Alkali- bzw. Ammoniumsalze der Vinylsulfonsäure. Die anderen Säuren können ebenfalls entweder in nicht neutralisierter Form oder in partiell bzw. bis zu 1OO % neutralisierter Form bei der Polymerisation eingesetzt werden. Die Monomeren der Gruppe (a) können entweder allein oder in Mischung untereinander bei der Polymerisation eingesetzt werden, so daß man entweder Homo- oder Copolymerisate erhält. Bevorzugte Monomere der Gruppe (a) sind Acrylsäure, Methacrylsäure, Acrylamid und/oder Methacrylamid. Diese Monomeren können in jedem beliebigen Verhältnis miteinander copolymerisiert werden.

Die Polymerisation der Monomeren der Gruppe (a) kann auch in Gegenwart von Vernetzern (Monomeren der Gruppe (b)) vorgenommen werden. Die Vernetzer enthalten mindestens zwei ethylenisch ungesättigte Doppelbindungen, geeignete Vernetzer sind beispielsweise N,N′-Methylen-bisacrylamid, Polyethylenglykoldiacrylate und Polyethylenglykoldimethylacrylate, die sich jeweils von Polyethylenglykolen eines Molekulargewichts von 126 bis 8.5OO ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte Anlagerungsprodukte von Ethylenoxid und/ oder Propylenoxid an Trimethylolpropan, mindestens zweifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether, Trimethylolpropandiallylether, Polyethylenglykoldivinylether, Butandioldivinylether, Pentaerythrittriallylether und/oder Divinylethylenharnstoff. Vorzugsweise setzt man wasserlösliche Vernetzer ein, z.B. N,N′-Methylen-bisacrylamid, Polyethylenglykoldiacrylate, Polyethylenglykoldimethacrylate, Pentaerythrittriallylether und/oder Divinylharnstoff. Die Vernetzer werden gegebenenfall in einer Menge von 0,001 bis 5, vorzugsweise 0,01 bis 2 Gew.%, bezogen auf die Monomerenmischung eingesetzt.

Die wasserlöslichen Monomeren der Gruppe (a) können nicht nur mit Hilfe der Monomeren der Gruppe (b) modifiziert werden, sondern – sofern eine Änderung der Eigenschaften der Polymerisate gewünscht wird – zusätzlich noch mit den Monomeren der Gruppe (c) bzw. mit den Monomeren der Gruppe (c) allein. Als Monomere der Gruppe (c) kommen Hydroxyethylacrylat, Hydroxypolyacrylat, Hydroxyethylmethacrylat, Hydroxypropylmethacrylat, Acrylnitril und/oder Methacrylnitril in Betracht. Sofern die Monomeren der Gruppe (c) zur Modifizierung der wasserlöslichen Polymerisate verwendet werden, setzt man 0,5 bis 30, vorzugsweise 2 bis 10 Gew.-% ein, bezogen auf die Monomerenmischungen, wobei die Summe der Gewichtsprozente der Monomerenmischungen immer 100 beträgt.

Die Polymerisation kann gegebenenfalls in Gegenwart der üblichen Polymerisationsregler erfolgen. Geeignete Polymerisationsregler sind beispielsweise Thioverbindungen, wie Thioglykolsäure, Mercaptoalkohole, z.B. 2-Mercaptoethanol, Mercaptopropanol und Mercaptobutanol, Dodecylmercaptan, Ameisensäure und Ammoniak.

Die Polymerisation erfolgt in Gegenwart der üblichen Polymerisationsinitiatoren, z.B. Ammonium-, Natrium- und Kaliumperoxidisulfat, Peroxiden, wie Dibenzoylperoxid, Dilaurylperoxid, Di-2-ethylhexylperoxidicarbonat, Dicyclohexylperoxidicarbonat, Bis(4-tert.-butylcyclohexyl)-peroxidicarbonat, tert.-Butylperpivalat, tert.-Butylperbenzoat, tert.-Butylpermaleinat, Di-tert.-butylperoxid, tert.-Butylhydroperoxid, Wasserstoffperoxid, sowie Redox-Katalysatoren, wobei als reduzierende Komponente Eisen-(II)-Ammoniumsulfat, Ascorbinsäure, Natriummethylsulfinat, Dinatriumbisulfat und Natriumhydrogensulfit in Betracht kommen. Außerdem eignen sich Azostarter, wie Azobisisobutyronitril, 2,2′-Azobis(N,N′-dimethylisobutyramidin)-dihydrochlorid, 2,2′-Azobis-(2-amidinopropan)-dihydrochlorid, 2,2′-Azobis(N,N′-dimethylenisobutyranilin), 4,4′-Azobis(4-cyanopentancarbonsäure) und 2-Carbamoylazo-isobutyronitril. Die Polymerisationsinitiatoren können entweder allein oder in Mischung angewendet werden. Die Zerfallsgeschwindigkeit von bei hohen Temperaturen zerfallenden Peroxiden kann durch Mitverwendung organischer Metallkomplexverbindungen, wie Kupferacetylacetonat, erniedrigt werden, so daß die Zerfallsgeschwindigkeit der Peroxide der jeweils gewählten Polymerisationstemperatur angepaßt werden kann. Die Polymerisationsinitiatoren werden im allgemeinen in einer Menge von 0,01 bis 5, vorzugsweise 0,2 bis 3 Gew.%, bezogen auf die bei der Polymerisation eingesetzten Monomeren, angewendet.

Für die Polymerisation werden die Monomeren in Wasser gelöst, die Monomerkonzentration in der wäßrigen Lösung liegt im allgemeinen zwischen 1O Gew.% bis zur Sättigungskonzentration, vorzugsweise 3O Gew.% bis zur Sättigungskonzentration. Die wäßrige Lösung wird dann in einem aliphatischen Kohlenwasserstoff suspendiert. Als aliphatische Kohlenwasserstoffe kommen $C_5$- bis $C_{10}$-Alkane in Betracht, z.B. Pentan, n-Hexan, Cyclohexan, Heptan, n-Octan, iso-Octan, Nonan, Decan, sowie Mischungen aliphatischer Kohlenwasserstoffe. Vorzugsweise verwendet man als aliphatischen Kohlenwasserstoff Cyclohexan als Ölphase bei der umgekehrten Suspensionspolymerisation. Das Gewichtsverhältnis von wäßriger Phase zur Ölphase bei der Suspensionspolymerisation beträgt im allgemeinen 1 bis 7 zu 9 bis 3.

Um die wäßrige Monomerlösung in dem aliphatischen Kohlenwasserstoff zu dispergieren, benötigt man anorganische Suspensionsmittel auf Basis modifizierter feinteiliger Mineralien sowie gemäß Erfindung zusätzlich ein nichtionisches Tensid. Die anorganischen Suspensionsmittel, die eine niedrige hydrophile-lyophile Balance haben, sind die bei den umgekehrten Suspensionspolymerisationsverfahren üblicherweise eingesetzten Mittel. Die mineralische Komponente dieser Stoffe wird beispielsweise von Bentonit, Montmorillonit oder Kaolin gebildet. Die feinteiligen Mineralien werden zur Modifizierung mit Salzen langkettiger Amine, z.B. $C_8$- bis $C_{24}$-Aminen oder quaternären Ammoniumsalzen behandelt, wobei eine Einlagerung der Aminsalze bzw. der quaternären Ammoniumsalze zwischen die einzelnen Schichten der feinteiligen Mineralien erfolgt. Die zur Modifizierung verwendeten gegebenenfalls quaternisierten Ammoniumsalze enthalten vorzugsweise 1 bis 2 $C_{10}$- bis $C_{22}$-Alkylreste. Die anderen Substituenten der Ammoniumsalze sind $C_1$- bis $C_4$-Alkyl oder Wasserstoff. Der Gehalt an freien Ammoniumsalzen der aminmodifizierten Mineralien beträgt höchstens 2 Gew.%. Mit Ammoniumsalzen modifizierte feinteilige Mineralien sind im Handel erhältlich.

Zu den anorganischen Suspensionsmitteln für die umgekehrte Suspensionspolymerisation gehört auch Siliciumdioxid, das mit siliciumorganischen Verbindungen umgesetzt worden ist. Eine geeignete siliciumorganische Verbindung ist beispielsweise Trimethylsilylchlorid.

Ziel der Modifizierung der anorganischen feinteiligen Mineralien ist es, die Benetzbarkeit der Mineralien mit dem als äußere Phase der umgekehrten Suspensionspolymerisation verwendeten aliphatischen Kohlenwasserstoff zu verbessern. Bei den schichtförmig aufgebauten natürlichen Mineralien, z.B. Bentonit und Montmorillonit, wird durch die Modifizierung mit Aminen erreicht, daß die modifizierten Mineralien in dem aliphatischen Kohlenwasserstoff quellen und dabei zu sehr feinen Teilchen zerfallen. Die Teilchengröße beträgt etwa 1 µm und liegt im allgemeinen in dem Bereich von 0,5 bis 5 µm. Die mit siliciumorganischen Verbindungen umgesetzten Siliciumdioxide haben eine Teilchengröße in dem Bereich von etwa 10 bis 40 nm. Die modifizierten feinteiligen Mineralien werden sowohl von der wäßrigen Monomerlösung als auch von dem Lösungsmittel benetzt und lagern sich dadurch in die Phasengrenzfläche zwischen wäßriger und organischer Phase. Sie verhindern bei einer Kollision zweier wäßriger Monomertröpfchen in der Suspension eine Koagulation.

Die Stabilität von Wasser-in-Öl-Suspensionen, die als Suspensionsmittel ein modifiziertes feinteiliges Mineral und als Ölphase einen aliphatischen Kohlenwasserstoff enthalten, kann überraschenderweise durch Zusatz von 0,1 bis 5 Gew.%, bezogen auf die eingesetzten Monomeren, eines nichtionischen Tensids so gesteigert werden, daß die Ansätze bei der Polymerisation nicht koagulieren oder agglomerieren.

Die nichtionischen Tenside, die bei dem Verfahren der umgekehrten Suspensionspolymerisation eingesetzt werden, haben einen HLB-Wert von 2 bis 16 (zur Definition des HLB-Werts, W.C. Griffin, J. Soc. Cosmetic Chem. 5, 249 (1954)). Als nichtionische Tenside eignen sich beispielsweise mit Ethylenoxid und/oder Propylenoxid alkoxylierte $C_8$- bis $C_{12}$-Alkylphenole. Handelsüblich sind beispielsweise Octyl- bzw. Nonylphenole, die mit 4 bis 20 Mol Ethylenoxid pro Mol Phenol umgesetzt sind. Andere nichtionische Tenside, die erfindungsgemäß verwendet werden, sind ethoxylierte $C_{10}$- bis $C_{24}$-Fettalkohole und/oder mit $C_{10}$- bis $C_{24}$-Fettsäuren partiell veresterte mehrwertige $C_3$- bis $C_6$-Alkohole. Diese können zusätzlich mit 2 bis 20 Mol Ethylenoxid umgesetzt sein. Als Fettalkohole eignen sich beispielsweise Palmitylalkohol, Stearylalkohol, Myristylalkohol, Laurylalkohol, Oxoalkohole, ungesättigte Alkohole, z.B. Oleylalkohol. Die Fettalkohole werden zu einem solchen Grad ethoxyliert, daß sie in Wasser löslich sind. Im allgemeinen setzt man 1 Mol Alkohol mit 2 bis 20 Mol Ethylenoxid um, damit man Tenside mit dem oben angegebenen HLB-Wert erhält.

$C_3$- bis $C_6$-Alkohole, die partiell verestert und gegebenenfalls ethoxyliert werden, sind beispielsweise Glycerin, Sorbit, Mannit und Pentaerythrit. Diese mehrwertigen Alkohole werden mit $C_{10}$- bis $C_{24}$-Fettsäuren, z.B. Ölsäure, Stearinsäure oder Palmitinsäure partiell verestert. Die Veresterung mit den Fettsäuren erfolgt dabei höchstens bis zu einem solchen Grad, daß noch eine OH-Gruppe des mehrwertigen Alkohols unverestert bleibt. Geeignete Veresterungsprodukte sind beispielsweise Sorbitanmonooleat, Sorbitantristearat, Mannitmonooleat, Glycerinmonooleat und Glycerindioleat. Die genannten Fettsäureester mehrwertiger Alkohole, die noch mindestens eine freie OH-Gruppe enthalten, können dann mit Ethylenoxid und/oder Propylenoxid umgesetzt werden. Pro Mol Fettsäureester verwendet man 2 bis 20 Mol Ethylenoxid. Der Ethoxylierungsgrad hat bekanntlich einen Einfluß auf den HLB-Wert der nichtionischen Tenside. Durch geeignete Wahl der Ethoxylierung kann man Tenside herstellen, die einen HLB-Wert in dem angegebenen Bereich aufweisen. Die nichtionischen Tenside können entweder allein oder auch in Mischung miteinander verwendet werden. Hierbei ergeben sich zahlreiche Variationsmöglichkeiten, z.B. kann man Tenside eines verschiedenen Ethoxylierungsgrades oder auch alkoxylierte Phenole zusammen mit ethoxylierten Fettalkoholen oder ethoxylierten Fettalkoholderivaten einsetzen. Vorzugsweise verwendet man, bezogen auf die bei der Polymerisation eingesetzten Monomeren, 0,2 bis 3 Gew.% eines nichtionischen Tensids zur Stabilisierung der Suspension.

Die umgekehrte Suspensionspolymerisation wird - wie bei Polymerisationen üblich - unter Ausschluß von Sauerstoff, vorzugsweise in einer Stickstoffatmosphäre, durchgeführt. Die Polymerisationstemperatur liegt zwischen 35 und 100°C. Die Polymerisation kann unter vermindertem oder erhöhtem Druck durchgeführt werden. Am einfachsten ist es, die Polymerisation bei der jeweiligen Siedetemperatur des aliphatischen Kohlenwasserstoffs bzw. des aliphatischen Kohlenwasserstoffgemisches durchzuführen. Bei der Polymerisation kann man entweder so vorgehen, daß man zunächst eine Wasser-in-Öl-Suspensionen aus der wäßrigen Monomerenlösung und dem aliphatischen Kohlenwasserstoff herstellt. Hierbei verwendet man bereits zur Unterstützung der Dispergierung der wäßrigen Lösung in dem Kohlenwasserstofföl das anorganische Suspensionsmittel und das nichtionische Tensid. Die

anorganischen Suspensionshilfsmittel als auch das nichtionische Tensid können dabei sowohl der wäßrigen Monomerlösung als auch dem aliphatischen Kohlenwasserstoff zugegeben werden. Man kann jedoch auch derart verfahren, daß man den aliphatischen Kohlenwasserstoff, das anorganische Suspensionsmittel sowie das nichtionische Tensid in dem Polymerisationsgefäß vorlegt und eine wäßrige Monomerlösung unter kräftiger Durchmischung zugibt, so daß sich eine Wasser-in-Öl-Suspension bildet. Die Polymerisation kann danach erfolgen oder sie wird so durchgeführt, daß man zunächst nur einen Teil der wäßrigen Monomerlösung in dem aliphatischen Kohlenwasserstoff dispergiert, die Polymerisation startet und anschließend nach Maßgabe des Fortschritts der Polymerisation die wäßrige Monomerlösung zulaufen läßt. Dabei bildet sich über eine Wasser-in-Öl-Monomer-Suspension eine Wasser-in-Öl-Polymersuspension aus. Man erhält auf diese Weise perlförmige Polymerisate, die je nach Reaktionsbedingungen eine Teilchengröße von 1 1m bis 2 mm, vorzugsweise 5O µm bis 1 mm haben. Die Wasser enthaltenden perlförmigen Polymerisate können nach beendeter Polymerisation durch Abtrennen (z.B. Filtrieren oder Zentrifugieren) aus der Wasser-in-Öl-Polymersuspension gewonnen werden. Man kann die perlförmigen Polymerisate, die von der Herstellung her noch Wasser enthalten, jedoch zunächst trocknen (z.B. mit Hilfe einer azeotropen Destillation) und sie danach vom aliphatischen Kohlenwasserstoff abtrennen.

Je nach Polymerisationsbedingungen und Einsatz von Monomeren erhält man Polymerisate eines unterschiedlichen Molekulargewichts, das mit Hilfe des K-Werts charakterisiert wird. Die K-Werte nach Fikentscher betragen 5O bis 3OO (gemessen in 5 %iger wäßriger Kochsalzlösung bei 25°C und einer Polymerkonzentration von O,1 %). Die niedrigmolekularen Polymerisate eignen sich beispielsweise als Schlichtemittel. Hochmolekulare Polymerisate werden als Flockungsmittel verwendet, z.B. wasserlösliche Polymerisate der Acrylsäure und des Acrylamids, Copolymerisate aus Acrylsäure und Acrylamid oder Copolymerisate aus Acrylamid und Dimethylaminoethylacrylathydrochlorid. Vernetzte Polymerisate, z.B. Copolymerisate aus Acrylsäure und Methylenbisacrylamid werden in Abhängigkeit vom Vernetzungsgrad entweder als Verdickungsmittel in Druckpasten oder als wasserabsorbierendes Material in Windeln verwendet. Um bei der Anwendung als Absorptionsmittel für Wasser eine schnelle Wasseraufnahme zu erreichen, kann man die perlförmigen Polymerisate mit feinteiligen anorganischen Materialien pudern, z.B. Bentonit, Montmorillonit, Kaolin, Chinaclay und Siliciumdioxid sowie einer thermisch behandelten synthetischen Kieselsäure. Bereits Mengen von O,2 Gew.%, bezogen auf perlförmiges Polymerisat, reichen aus, um die Wasseraufnahmegeschwindigkeit des Polymeren gegenüber dem nicht behandelten Material zu erhöhen.

Die in den Beispielen angegebenen Teile sind Gewichtsteile, die Angaben in Prozent beziehen sich auf das Gewicht der Stoffe. Der K-Wert wurde nach H. Fikentscher, Cellulose-Chemie 13, 48 bis 64 und 71 bis 74 (1932) in 5 %iger wäßriger Kochsalzlösung bei einer Temperatur von 25°C und einer Polymerkonzentration von O,1 Gew.% gemessen; dabei bedeutet K=kx1O$^3$. Die Bestimmung der K-Werte ist selbstverständlich nur für die löslichen Polymerisate möglich. Die vernetzten Copolymerisate können auf diese Weise nicht charakterisiert werden.

Beispiel 1

In einem 4O l fassenden Kessel aus Stahl, der mit einem Rührer, Rückflußkühler und Zulaufvorrichtungen ausgestattet ist, werden 28 l Cyclohexan, 6O g eines handelsüblichen, mit Dihexadecyldimethylamoniumchlorid modifizierten Montmorillonits einer Teilchengröße von kleiner 2 µm und 15 g eines nichtionischen Tensids vorgelegt, das durch Umsetzung von 8 Mol Ethylenoxid mit 1 Mol Nonylphenol erhältlich ist. Die Vorlage wird anschließend unter Rühren auf eine Temperatur von 60°C erhitzt und durch Anlegen von Vakuum zum Sieden gebracht.

Dann stellt man eine Monomerlösung her, indem man zu 4972 g Wasser 3900 g Acrylsäure und 4000 g einer 50%igen Natronlauge zugibt. Zu dieser Lösung gibt man dann 5,1 g N,N'-Methylenbisacrylamid und 26 ml einer 1%igen wäßrigen Lösung von Nitrilotrinatriumacetat. Die so erhaltene Lösung wird dann über eine Begasungskolonne von Sauerstoff befreit, mit einer Lösung von 15,3 g Kaliumperoxidisulfat in 500 ml Wasser gemischt und innerhalb einer Stunde zu der bei 60°C siedenden Vorlage gegeben. Nach Zugabe der Monomerlösung wird das Reaktionsgemisch noch eine Stunde bei 60°C gehalten. Danach wird das Wasser der Wasser-in-Öl-Polymersuspension azeotrop abdestilliert und das perlförmige Polymerisat durch Filtration von Cyclohexan getrennt. Das Polymerisat wird anschließend bei 60°C im Vakuumtrockenschrank über Nacht getrocknet. Man erhält völlig agglomeratfreie, kugelförmige Polymerperlen mit einer Teilchengröße von 100 bis 400 µm.

Das erhaltene Polymerisat wird in zwei gleiche Teile geteilt. Ein Teil des Polymerisates wird mit 25 g einer feinteiligen synthetischen Kieselsäure (Aerosil® 200) gemischt, der andere Teil mit 25 g eines feinteiligen China-Clays. Die Polymerisatperlen, die die anorganischen Materialien oberflächlich enthalten, werden als Absorptionsmittel für Wasser verwendet. Beide Proben absorbieren Wasser mit derselben Geschwindigkeit. Die Polymerisate können beispielsweise als Einlagen in Windeln zur Aufnahme von Urin eingesetzt werden.

Beispiel 2

In einem 1600 l fassenden Kessel aus Stahl, der mit einem Rührer, Rückflußlühler und Zulaufvorrichtungen ausgestattet ist, werden 640 l Cyclohexan, 1500 g eines mit Di-hexadecyldimethylammoniumchlorid modifizierten handelsüblichen Montmorillonits und 600 g eines nichtionischen Netzmittels vorgelegt, das durch Umsetzung von 1 Mol Nonylphenol mit 6 Mol Ethylenoxid erhältlich ist. Der Kesselinhalt

wird auf 60°C aufgeheizt und durch Anlegen von Vakuum zum Sieden unter Rückfluß gebracht.

Innerhalb einer Stunde fügt man dazu eine Monomerlösung, die man durch Mischen von 98 kg Wasser, 86 kg Acrylsäure und 80 kg 50%iger wäßriger Natronlauge erhält und zu der man 110 g N,N'-Methylen-bisacrylamid und 2,3 g einer 40%igen Lösung von Nitrilotrinatriumacetat sowie eine Lösung von 336 g Kaliumperoxidisulfat in 21 l Wasser zugefügt hat. Nachdem die gesamte Monomerlösung unter ständigem Rühren des Reaktionsgemisches zugegeben ist, wird das Reaktionsgemisch eine Stunde bei einer Temperatur von 60°C unter Rückfluß siedend polymerisiert. Anschließend wird das Wasser der Wasser-in-Öl-Polymersuspension azeotrop abdestilliert, das so getrocknete Polymerisat vom Cyclohexan abfiltriert und bei 80°C im Schaufeltrockner getrocknet. Während des Trocknens setzt man 1,1 kg einer feinteiligen synthetischen Kieselsäure (Aerosil® 200) zu. Man erhält völlig agglomeratfreie, kugelförmige Polymerperlen mit einer Teilchengröße von 100 bis 400 µm.

Beispiel 3

In einem 40 l fassenden Kessel aus Stahl, der mit einem Rührer, Rückflußkühler und Zulaufvorrichtungen ausgestattet ist, legt man 28 l Cyclohexan, 80 g eines handelsüblichen mit Trimethylsilylchlorid modifizierten, feinteiligen Kieselgels (Teilchendurchmesser 10 bis 40 nm) und 30 g eines ethoxylierten Nonylphenols vor, das durch Ethoxylierung von Nonylphenol mit Ethylenoxid im Molverhältnis 1:8 erhältlich ist. Der Inhalt des Kessels wird dann auf 60°C erhitzt und durch Anlegen von Vakuum zum Sieden gebracht.

Dann stellt man eine Monomerlösung her, indem 4972 g Wasser, 3900 g Acrylsäure und 4000 g 50 %ige wäßrige Natronlauge mischt und zu dieser Mischung dann 5,1 g N,N'-Methylen-bisacrylamid und 26 ml einer 1 %igen Lösung von Nitrilotrinatriumacetat zufügt. Die Lösung wird dann über eine Begasungskolonne von Sauerstoff befreit, mit einer Lösung von 15,3 g Kaliumperoxidisulfat in 500 ml Wasser gemischt und innerhalb einer Stunde unter ständigem Rühren zu der siedenden Vorlage zugegeben. Nach Abschluß der Monomerzugabe wird das Reaktionsgemisch eine Stunde nachpolymerisiert und die so erhaltene Wasser-in-Öl-Polymersuspension anschließend durch azeotropes Abdestillieren von Wasser aufgearbeitet. Mit Hilfe einer Filtration wird das Polymerisat vom Cyclohexan getrennt. Das Polymerisat wird bei 60°C im Vakuumtrockenschrank über Nacht getrocknet. Man erhält völlig agglomeratfreie, kugelförmige Polymerperlen, die einen Teilchendurchmesser von 70 bis 300 µm haben. Das Polymerisat wird anschließend mit 50 g China-Clay gemischt. Es wird in dieser Form als Absorptionsmittel für Wasser in Windeln verwendet.

Beispiel 4

In einem 4-l-Kessel, der mit Rührer, Rückflußkühler und Zulaufgefäß ausgestattet ist, werden 1,6 l Cyclohexan, 4 g eines handelsüblichen mit Dioctadecyl-dimethylammoniumchlorid modifizierten Smektits und 2 g eines ethoxylierten $C_{10}$-Alkohols (erhalten durch Umsetzung von 1 Mol des Alkohols mit 3 Mol Ethylenoxid) vorgelegt. Die Vorlage wird anschließend auf 50°C erhitzt und durch Anlegen von Vakuum zum Sieden gebracht.

Dann stellt man eine Monomerlösung aus 250 g Wasser, 223 g Acrylsäure und 203 g 50 %iger wäßriger Natronlauge her. Zu dieser Lösung gibt man 280 mg N,N'-Methylen-bisacrylamid, sowie 0,6 ml einer 1 %igen wäßrigen Lösung von Nitrilotrinatriumacetat und 1,12 g Kaliumperoxidisulfat. Die Mischung wird durch Einleiten von Stickstoff von Sauerstoff befreit und anschließend innerhalb einer Stunde in die siedende Vorlage getropft. Dabei entsteht eine Wasser-in-Öl-Suspension, aus der sich während der Polymerisation eine Wasser-in-Öl-Polymersuspension bildet. Die Nachpolymerisationszeit beträgt eine Stunde. Dann wird das in den Polymerteilchen befindliche Wasser durch azeotrope Destillation entfernt und das Polymerisat durch Filtration gewonnen. Es wird über Nacht bei einer Temperatur von 60°C im Vakuumtrockenschrank getrocknet. Man erhält auf diese Weise ein feinteiliges Polymerisat mit einer Teilchengröße von 100 bis 400 µm. Zur Erhöhung der Aufnahmegeschwindigkeit für Wasser wird das feinteilige Polymerisat mit 2,8 g eines feinteiligen China-Clays gemischt.

Beispiel 5

In einem 4 l fassenden Kessel aus Stahl, der mit einem Rührer, Rückflußkühler und Zulaufgefäß ausgestattet ist, werden 1,6 l Cyclohexan, 4 g eines handelsüblichen, mit Di-hexadecyl-dimethylammoniumchlorid modifizierten Montmorillonits und 2 g eines nichtionischen Tensids vorgelegt, das durch Addition von Ethylenoxid an einen $C_{13}/C_{15}$-Oxoalkohol im Molverhältnis 3:1 erhältlich ist. Der Inhalt der Vorlage wird auf eine Temperatur von 50°C erhitzt und durch Anlegen von Vakuum zum Sieden gebracht.

Dann wird eine Monomerlösung hergestellt, indem man zunächst 250 g Wasser, 223 g Acrylsäure und 203 g 50 %ige wäßrige Natronlauge mischt und zu dieser Lösung dann 280 mg N,N'-Methylen-bisacrylamid und 0,6 ml einer 1 %igen wäßrigen Lösung von Nitrilotrinatriumacetat und 1,12 g Kaliumperoxidisulfat zufügt. Die Mischung wird anschließend durch Einleiten von Stickstoff vom Sauerstoff befreit und innerhalb einer Stunde zu der bei 50°C siedenden Vorlage zugefügt. Man polymerisiert eine Stunde lang nach und entfernt danach das in den Polymerteilchen befindliche Wasser durch azeotrope Destillation. Das Polymerisat wird anschließend vom Cyclohexan abfiltriert und bei 60°C im Vakuumtrockenschrank über Nacht getrocknet. Man erhält ein feinteiliges, perlförmiges Polymerisat, das eine Teilchengröße von 150 bis 600 µm hat. Um die Wasseraufnahmegeschwindigkeit dieses Polymerisats zu erhöhen, pudert man es mit 2,8 g eines feinteiligen Kaolins.

Beispiel 6

In einem 4-l-Kessel aus Stahl, der mit einem Rührer, Rückflußkühler und Zulaufgefäß ausgestattet ist, werden 1,6 l Cyclohexan, 4 g eines handelsüblichen mit Di-hexadecyl-dimethylammoniumchlorid modifizierten Montmorillonits und 2 g eines nichtionischen Tensids vorgelegt, das durch die Umsetzung von Sorbitanmonooleat mit Ethylenoxid im Molverhältnis 1:5 erhältlich ist. Der Kesselinhalt wird auf 60°C erwärmt und durch Druckerniedrigung zum Sieden gebracht.

Zu dieser Vorlage gibt man bei 50°C eine Monomerlösung, die dadurch hergestellt wird, daß man 250 g Wasser, 223 g Acrylsäure und 203 g einer 50 %igen wäßrigen Natronlauge mischt und zu dieser Lösung dann 280 mg N,N'-Methylen-bisacrylamid sowie 0,6 ml einer 1 %igen Lösung von Nitrilotrinatriumacetat und 1,12 g Kaliumperoxidisulfat zugibt. Diese Monomermischung wird vor der Zugabe zur Vorlage durch Einleiten von Stickstoff von Sauerstoff befreit. Die umgekehrte Suspensionspolymerisation ist nach einer Nachpolymerisationszeit von einer Stunde beendet. Dann wird das in den Polymerteilchen befindliche Wasser durch azeotrope Destillation entfernt, das Polymerisat vom Cyclohexan durch Abfiltrieren getrennt und das Polymere bei 60°C über Nacht im Vakuumtrockenschrank getrocknet. Man erhält ein feinteiliges perlförmiges Polymerisat mit einer Teilchengröße von 50 bis 200 µm. Um die Aufnahmegeschwindigkeit dieses Polymerisats für Wasser zu erhöhen, wird es mit 2,8 g eines feinteiligen Kaolins gepudert.

Beispiel 7

In einem Kessel aus Stahl, der mit einem Rührer, Rückflußkühler und Zulaufgefäß ausgestattet ist, werden 1,6 l Cyclohexan und 4 g eines handelsüblichen mit Di-hexadecyl-dimethylammoniumchlorid modifizierten Montmorillonits vorgelegt und darin auf 60°C erhitzt. Durch Erniedrigung des Druckes bringt man den Kesselinhalt zum Sieden.

Für die umgekehrte Suspensionspolymerisation wird eine Monomerlösung hergestellt, indem man zunächst 250 g Wasser, 2,23 g Acrylsäure und 2,03 g einer 50 %igen wäßrigen Natronlauge mischt und zu dieser Lösung danach 100 mg eines nichtionischen Tensids zusetzt, das durch Reaktion eines $C_{12}/C_{14}$-Fettalkohols mit Ethylenoxid im Molverhältnis 1:8 erhältlich ist. Außerdem fügt man zu der Monomerlösung 3 g Ameisensäure sowie 0,6 ml einer 1 %igen wäßrigen Lösung von Nitrilotrinatriumacetat und 0,84 g Kaliumperoxidisulfat. Die Monomerlösung wird durch Einleiten von Stickstoff vom Sauerstoff befreit und anschließend innerhalb einer Stunde zu der auf 60°C erhitzten und siedenden Vorlage getropft. Nach einer Nachpolymerisationszeit von einer Stunde wird das in den Polymerteilchen befindliche Wasser durch azeotrope Destillation entfernt. Der Kesselinhalt wird filtriert. Auf dem Filter verbleibt ein feinteiliges perlförmiges Polymerisat, das bei einer Temperatur von 60°C über Nacht im Vakuumtrockenschrank getrocknet wird. Der Teilchendurchmesser der Polymerisatperlen beträgt 100 bis 400 µm. Das Polymerisat hat einen K-Wert von 90.

Beispiel 8

In einem Kessel aus Stahl, der mit einem Rührer, Rückflußkühler und einem Zulaufgefäß versehen ist, werden 1,6 l Cyclohexan, 4 g eines handelsüblichen mit Di-hexadecyl-dimethylammoniumchlorid modifizierten Montmorillonits und 2 g eines nichtionischen Tensid vorgelegt, das durch Addition von Ethylenoxid an einen $C_{16}/C_{18}$-Fettalkohol im Molverhältnis 11:1 erhältlich ist. Der Kesselinhalt wird unter ständigem Rühren auf eine Temperatur von 45°C erwärmt und durch Erniedrigung des Drucks zum Sieden gebracht.

Für die umgekehrte Suspensionspolymerisation stellt man eine Monomerlösung her, indem man 82 g Wasser, 390 g 50 %ige wäßrige Acrylamidlösung, 85 % Acrylsäure und 94 g 50 %ige wäßrige Natronlauge mischt und zu dieser Lösung danach 244 mg Ameisensäure sowie 15 ml einer 1 %igen Lösung von Diethylentriaminpentanatriumacetat und 612 mg 2,2'-Azobis(2-amidinopropan)-dihydrochlorid zugibt. Die Monomerlösung wird durch Einleiten von Stickstoff von Sauerstoff befreit und anschließend innerhalb einer Stunde zu der bei 45°C unter vermindertem Druck siedenden Vorlage getropft. Danach wird das Reaktionsgemisch eine Stunde lang bei der angegebenen Temperatur unter Rückfluß siedend nachpolymerisiert. Danach wird das in den Polymerteilchen befindliche Wasser azeotrop entfernt und das im Kessel verbleibende Reaktionsgemisch filtriert. Das abfiltrierte Polymerisat wird bei 60°C über Nacht im Vakuumtrockenschrank getrocknet. Es handelt sich hierbei um ein feinteiliges perlförmiges Polymerisat, das eine Teilchengröße von 80 bis 400 µm und einen K-Wert von 270 hat.

Beispiel 9

In einem 4 l fassenden Kessel aus Stahl, der mit einem Rührer, Rückflußkühler und einem Zulaufgefäß ausgestattet ist, werden 1,6 l Cyclohexan, 4 g eines handelsüblichen mit Di-hexadecyl-dimethylammoniumchlorid modifizierten Montmorillonits und 2 g eines nichtionischen Tensids vorgelegt, das durch Umsetzung eines $C_{16}/C_{18}$-Fettalkohols mit Ethylenoxid im Molverhältnis 1:11 erhältlich ist. Der Kesselinhalt wird auf eine Temperatur von 55°C erhitzt und durch Erniedrigung des Drucks zum Sieden gebracht.

Für die Durchführung der umgekehrten Suspensionspolymerisation verwendet man eine Monomerlösung, die man durch Mischen von 280 g Wasser, 280 g 50 %ige wäßrige Acrylamidlösung und 140 g Trimethylammoniumethylacrylat-chlorid herstellt und zu der man anschließend noch 280 ml Ameisensäure sowie 15 ml einer 1 %igen wäßrigen Lösung von Diethylentriaminpentanatriumacetat und 560 mg 2,2'-Azobis-(2-amidionopropan)-dihydrochlorid gibt. Die Monomermischung wird anschließend durch Einleiten von Stickstoff vom Sauerstoff befreit und danach innerhalb einer Stunde zu der bei 55°C unter vermindertem Druck siedenden Vorlage

getropft. Die Nachpolymerisationsdauer beträgt eine Stunde. Danach wird das in den Polymerteilchen befindliche Wasser azeotrop entfernt. Das Polymerisat wird danach vom Cyclohexan abfiltriert und bei einer Temperatur von 60°C über Nacht im Vakuumtrockenschrank getrocknet. Man erhält ein feinteiliges perlförmiges Polymerisat, das eine Teilchengröße von 100 bis 400 µm und einen K-Wert von 230 hat.

Vergleichsbeispiel 1

In einem 40 l fassenden Kessel aus Stahl, der mit einem Rührer, Rückflußkühler und Zulaufeinrichtungen versehen ist, werden 28 l Cyclohexan und 60 g eines handelsüblichen mit Di-hexadecyl-dimethylammoniumchlorid modifizierten Montmorillonits vorgelegt. Der Kesselinhalt wird auf 60°C erhitzt und durch Erniedrigung des Drucks zum Sieden gebracht.

Zur Durchführung der umgekehrten Suspensionspolymerisation wird eine Monomerlösung hergestellt, indem man 4972 g Wasser, 3900 g Acrylsäure und 4000 g 50 %ige wäßrige Natronlauge mischt und zu dieser Lösung anschließend 5,1 g N,N'-Methylen-bisacrylamid und 26 ml einer 1 %igen wäßrigen Lösung von Nitrilotrinatriumacetat zufügt. Diese Lösung wird über eine Begasungskolonne von Sauerstoff befreit, mit einer Lösung von 15,3 g Kaliumperoxidisulfat in 500 ml Wasser vereinigt und innerhalb einer Stunde zu der bei 60°C unter vermindertem Druck siedenden Vorlage gefahren. Auf die Nachpolymerisation wurde verzichtet, weil der gesamte Ansatz bereits koaguliert war.

Vergleichsbeispiel 2

In einem 4 l fassenden Kessel aus Stahl, der mit einem Rührer, Rückflußkühler und Zulaufgefäß ausgestattet ist, werden 1,6 l Cyclohexan und 4 g eines handelsüblichen mit Di-octadecyl-dimethyl-ammoniumchlorid modifizierten Smektits vorgelegt. Der Inhalt des Kessels wird auf 50°C erwärmt und durch Druckerniedrigung zum Sieden gebracht.

Zur Durchführung der umgekehrten Suspensionspolymerisation wird eine Monomerlösung hergestellt, indem man zunächst 250 g Wasser, 223 g Acrylsäure und 2,03 g 50 %ige wäßrige Natronlauge mischt und zu dieser Lösung 280 mg N,N'-Methylen-bisacrylamid sowie 0,6 ml einer 1 %igen Lösung von Nitrilotrinatriumacetat und 1,12 g Kaliumperoxidisulfat zusetzt. Die Mischung wird durch Einleiten von Stickstoff von Sauerstoff befreit und danach innerhalb einer Stunde unter ständigem Rühren zur Vorlage getropft. Bereits während des Zulaufs koaguliert das Reaktionsgemisch.

Vergleichsbeispiel 3

In einem 4 l fassenden Kessel aus Stahl, der mit einem Rührer, Rückflußkühler und Zulaufgefäß ausgestattet ist, werden 1,6 l Cyclohexan, 4 g eines handelsüblichen, mit Di-hexadecyl-dimethyl-ammoniumchlorid modifizierten Montmorillonits und 40 mg Natriumlaurylsulfat vorgelegt. Der Inhalt des Kessels wird eine Stunde bei Raumtemperatur gerührt, dann auf 50°C erhitzt und anschließend durch Erniedrigung des Drucks zum Sieden gebracht.

Um die umgekehrte Suspensionspolymerisation durchzuführen, wird eine Monomerlösung hergestellt, indem man 250 g Wasser, 223 g Acrylsäure und 203 g 50 %ige wäßrige Natronlauge mischt und zu dieser Mischung anschließend 280 mg N,N'-Methylen-bisacrylamid, 0,6 ml einer 1 %igen Lösung von Nitrilotrinatriumacetat sowie 35 mg Calciumhydroxid und 1,12 g Kaliumperoxidisulfat zufügt. Die Mischung wird durch Einleiten von Stickstoff von Sauerstoff befreit und anschließend unter ständigem Rühren der Vorlage innerhalb einer Stunde zur Vorlage getropft. Bereits während des Zulaufs koaguliert der Ansatz.

Vergleichsbeispiel 4

In einem Kessel aus Stahl, der mit einem Rührer, Rückflußkühler und Zulaufgefäß ausgestattet ist, werden 1,6 l Cyclohexan und 4 g eines handelsüblichen, mit Di-hexadecyl-dimethyl-ammoniumchlorid modifizierten Montmorillonits vorgelegt. Die Vorlage wird auf eine Temperatur von 60°C erwärmt und durch Erniedrigung des Drucks zum Sieden gebracht.

Zur Durchführung der umgekehrten Suspensionspolymerisation stellt man eine Monomerlösung her, indem man 250 g Wasser, 223 g Acrylsäure und 203 g 50 %ige wäßrige Natronlauge mischt und zu dieser Lösung dann 2 g eines handelsüblichen anionischen Tensids (Natriumsalz eines Fettalkoholethersulfats) sowie 280 mg N,N'-Methylen-bisacrylamid und 0,6 ml einer 1 %igen Lösung von Nitrilotrinatriumacetat und 0,84 g Kaliumperoxidisulfat zufügt. Die Monomermischung wird dann durch Einleiten von Stickstoff von Sauerstoff befreit und anschließend innerhalb einer Stunde zu der ständig gerührten Vorlage getropft. Die Temperatur bei der Polymerisation und Nachpolymerisation, die eine Stunde in Anspruch nimmt, beträgt jeweils 60°C. Das in den Polymerteilchen befindliche Wasser wird danach durch azeotrope Destillation entfernt. Das Polymerisat wird vom Cyclohexan abfiltriert und bei 60°C über Nacht im Vakuumtrockenschrank getrocknet. Man erhält auf diese Weise ein feinteiliges Agglomerat mit einem Durchmesser von etwa 1 bis 2 mm. Die Rieselfähigkeit und die Wasseraufnahmegeschwindigkeit sind schlechter als bei perlförmigen Polymerisaten gemäß den Beispielen.

## Patentansprüche

1. Verfahren zur Herstellung perlförmiger Polymerisate auf Basis von wasserlöslichen ethylenisch ungesättigten Monomeren durch umgekehrte Suspensionspolymerisation, be der man zunächst eine wäßrige Lösung der Monomeren in einem aliphatischen Kohlenwasserstoff unter Verwendung anorganischer Suspensionsmittel auf Basis modifizierter feinteiliger Mineralien, die durch Behandlung mit

Salzen langkettiger Amine oder quaternären Ammoniumsalzen modifiziert sind und höchstens 2 Gew.-% an freien Ammoniumsalzen enthalten oder die durch Umsetzung von feinteiligem Siliciumdioxid mit siliciumorganischen Verbindungen erhältlich sind, zu einer Wasser-in-Öl-Suspension dispergiert und die Suspension anschließend in Gegenwart von Polymerisationsinitiatoren unter Ausschluß von Sauerstoff und unter Bildung einer Wasser-in-Öl-Polymersuspension bei 35 bis 100°C polymerisiert, dadurch gekennzeichnet, daß man die Polymerisation zusätzlich in Gegenwart von 0,1 bis 5 Gew.-%, bezogen auf die eingesetzten Monomeren, eines nichtionischen Tensids durchführt, das einen HLB-Wert von 2 bis 16 hat.

2. Verfahren nach Anspruch 1, dadurch gekennzeichnet, daß man als nichtionische Tenside mit Ethylenoxid und/oder Propylenoxid alkoxylierte $C_8$- bis $C_{12}$-Alkylphenole einsetzt.

3. Verfahren nach Anspruch 1, dadurch gekennzeichnet, daß man als nichtionische Tenside ethoxylierte $C_{10}$- bis $C_{24}$-Fettalkohole und/oder ethoxylierte, mit $C_{10}$- bis $C_{24}$-Fettsäuren partiell veresterte mehrwertige $C_3$- bis $C_6$-Alkohole einsetzt.

4. Verfahren nach einem der Ansprüche 1 bis 3, dadurch gekennzeichnet, daß man als wasserlösliche ethylenisch ungesättigte Monomere

a) ethylenisch ungesättigte $C_3$- bis $C_5$-Carbonsäuren, deren Amide und Ester mit Aminoalkoholen der Formel

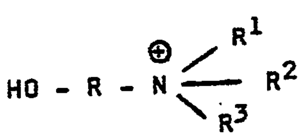

in der R = $C_2$- bis $C_6$-Alkylen,
$R^1$, $R^2$, $R^3$ = H, $CH_3$, $C_2H_5$, $C_3H_7$ bedeutet,
N-Vinylpyrrolidon, Acrylamidopropansulfonsäure, Vinylphosphonsäure und/oder Alkali- bzw. Ammoniumsalze der Vinylsulfonsäure einsetzt.

5. Verfahren nach Anspruch 4, dadurch gekennzeichnet, daß man die Polymerisation zusätzlich in Gegenwart von

b) 0,001 bis 5 Gew.-%, bezogen auf die Monomermischung, eines Vernetzers durchführt.

6. Verfahren nach Anspruch 4, dadurch gekennzeichnet, daß man die Polymerisation der Monomeren a) zusätzlich in Gegenwart von

c) 0,5 bis 30 Gew.-%, bezogen auf die Monomermischung, Hydroxyethylmethracrylat, Hydroxypropylacrylat, Hydroxyethylmethacrylat, Hydroxypropylmethacrylat, Acrylnitril und/oder Methacrylnitril durchführt.

7. Verfahren nach Anspruch 4, dadurch gekennzeichnet, daß man

a) Acrylsäure, Methacrylsäure, Acrylamid und/oder Methacrylamid mit

b) 0,001 bis 5 Gew.-% bezogen auf die Monomerenmischung, N,N'-Methylen-bisacrylamid, Polyethylenglykoldiacrylat, Polyethylenglykoldimethacrylat, Pentaerythrittriallylether und/oder Divinylharnstoff

copolymerisiert.

## Claims

1. A process for the preparation of a bead polymer based on water-soluble ethylenically unsaturated monomers by reverse suspension polymerization, in which an aqueous solution of the monomers is first dispersed in an aliphatic hydrocarbon using an inorganic suspending agent based on a modified finely divided mineral, which has been modified by treatment with a salt and contains not more than 2% by weight of free ammonium salt or which can be obtained by reacting finely divided silica with an organic silicon compound, to give a water-in-oil suspension, and the suspension is then polymerized at from 35 to 100°C in the presence of a polymerization initiator, with the exclusion of oxygen and with the formation of a water-in-oil polymer suspension, wherein the polymerization is additionally carried out in the presence of from 0.1 to 5% by weight, based on the monomers used, of a nonionic surfactant having an HLB value of from 2 to 16.

2. A process as claimed in claim 1, wherein a $C_8$–$C_{12}$-alkylphenol oxyalkylated with ethylene oxide and/or propylene oxide is used as the nonionic surfactant.

3. A process as claimed in claim 1, wherein oxyethylated $C_{10}$–$C_{24}$-fatty alcohols and/or oxyethylated polyhydric $C_3$–$C_6$-alcohols partially esterified with $C_{10}$–$C_{24}$-fatty acids are used as the nonionic surfactants.

4. A process as claimed in any of claims 1 to 3, wherein

(a) ethylenically unsaturated $C_3$–$C_5$-carboxylic acids, their amides or esters with aminoalcohols of the formula

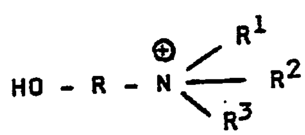

where R is $C_2$–$C_6$-alkylene and $R^1$, $R^2$ and $R^3$ are each H, $CH_3$, $C_2H_5$ or $C_3H_7$, or N-vinylpyrrolidone, acrylamidopropanesulfonic acid, vinylphosphonic acid and/or alkali metal or ammonium salts of vinylsulfonic acid are used as water-soluble ethylenically unsaturated monomers.

5. A process as claimed in claim 4, wherein the polymerization is additionally carried out in the presence of

(b) from 0.001 to 5% by weight, based on the monomer mixture, of a crosslinking agent.

6. A process as claimed in claim 4, wherein the polymerization of the monomers (a) is additionally carried out in the presence of

(c) from 0.5 to 30% by weight, based on the monomer mixture, of hydroxyethyl methacrylate, hydroxypropyl acrylate, hydroxyethyl methacrylate, hydroxypropylmethacrylate, acrylonitrile and/or methacrylonitrile.

7. A process as claimed in claim 4, wherein

(a) acrylic acid, methacrylic acid, acrylamide and/or methacrylamide are copolymerized with

(b) from 0.001 to 5% by weight, based on the monomer mixture, of N,N'-methylenebisacrylamide, polyethylene glycol diacrylate, polyethylene glycol dimethacrylate, pentaerythritol triallyl ether and/or divinylurea.

## Revendications

1. Procédé de fabrication de polymères en forme de perles, à base de monomères solubles dans l'eau, à insaturation éthylénique, par polymérisation en suspension inversés, conformément auquel on disperse d'abord en une suspension eau-dans-huile, une solution aqueuse de monomères dans un hydrocarbure aliphatique, en recourant à l'emploi d'agents de mise en suspension inorganiques à base de matières minérales finement divisées, modifiées, modifiées par traitement par des sels d'amines à longue chaîne ou des sels d'ammonium quaternaire et qui contiennent au maximum 2% en poids de sels d'ammonium libres, ou que l'on peut obtenir par la réaction de bioxyde de silicium finement divisé sur des composés organiques du silicium et on polymérise ensuite la suspension à 35–100°C, en présence d'amorceurs de polymérisation et sous exclusion d'oxygène et formation d'une suspension de polymère eau-dans-huile, caractérisé en ce que l'on réalise complémentairement la polymérisation en présence de 0,1 à 5% en poids, par rapport aux monomères mis en œuvre, d'un agent tensioactif non ionique, qui possède une valeur HLB de 2 à 16.

2. Procédé suivant la revendication 1, caractérisé en ce que l'on utilise, à titre d'agents tensioactifs non ioniques, des alkyl($C_8$–$C_{12}$)phénols alcoxylés à l'aide d'oxyde d'éthylène et/ou d'oxyde de propylène.

3. Procédé suivant la revendication 1, caractérisé en ce que l'on utilise, à titre d'agents tensioactifs non ioniques, des alcools gras en $C_{10}$ à $C_{24}$, éthoxylés et/ou des alcools en $C_3$ à $C_6$, polyhydroxylés, partiellement estérifiés par des acides gras en $C_{10}$ à $C_{24}$, éthoxylés.

4. Procédé suivant l'une des revendications 1 à 3, caractérisé en ce que l'on utilise, à titre de monomères solubles dans l'eau, à insaturation éthylénique,

a) des acides carboxyliques en $C_3$ à $C_5$, à insaturation éthylénique, leurs amides et esters avec des aminoalcools de la formule

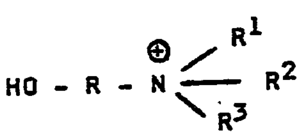

dans laquelle R représente un radical alkylène en $C_2$ à $C_6$

$R^1$, $R^2$, $R^3$ représentent des atomes d'hydrogène, des radicaux $CH_3$, $C_2H_5$, $C_3H_7$,

la N-vinylpyrrolidone, l'acide acrylamidopropanesulfonique, l'acide vinylphosphonique et/ou des sels de métaux alcalins ou d'ammonium de l'acide vinylsulfonique.

5. Procédé suivant la revendication 4, caractérisé en ce que l'on réalise la polymérisation complémentairement en présence de

b) 0,001 à 5% en poids, par rapport au mélange des monomères, d'un agent de réticulation.

6. Procédé suivant la revendication 4, caractérisé en ce que l'on réalise la polymérisation des monomères a) complémentairement en présence de

c) 0,5 à 30% en poids, par rapport au mélange des monomères,

de méthacrylate d'hydroxyéthyle, d'acrylate d'hydroxypropyle, de méthacrylate d'hydroxyéthyle, de méthacrylate d'hydroxypropyle, d'acrylonitrile et/ou de méthacrylonitrile.

7. Procédé suivant la revendication 4, caractérisé en ce que l'on polymérise

a) de l'acide acrylique, de l'acide méthacrylique, de l'acrylamide et/ou du méthacrylique, de l'acrylamide et/ou du méthacrylamide avec

b) 0,001 à 5% en poids, par rapport au mélange des monomères,

des N,N'-méthylène-bisacrylamide, de diacrylate de polyéthylène glycol, de diméthacrylate de polyéthylène glycol, d'éther triallylique du pentaérythritol et/ou de divinylurée.